# EUROPÄISCHE PATENTSCHRIFT

(11) **EP 2 123 340 B1**
(45) Veröffentlichungstag und Bekanntmachung des Hinweises auf die Patenterteilung: **04.07.2012**
(21) Anmeldenummer: 09159487.9
(22) Anmeldetag: 06.05.2009
(51) Int. Cl.: B01D 35/16, B01D 27/08, B01D 36/00

(54) **Filter**
Filter
Filtre

(30) Priorität: 16.05.2008 DE 202008006721 U
(43) Veröffentlichungstag der Anmeldung: 25.11.2009
(73) Patentinhaber: MANN+HUMMEL GmbH, 71638 Ludwigsburg (DE)
(72) Erfinder: Thalmann, Christian, 67346, Speyer (DE)

(56) Entgegenhaltungen:
- EP-A- 0 529 286
- WO-A-2005/079949
- FR-A- 2 851 477
- US-A1- 2007 034 580
- US-A1- 2007 114 170

## Beschreibung

### Technisches Gebiet

Die Erfindung betrifft einen Filter, insbesondere einen Kraftstofffilter für ein Kraftfahrzeug mit den Merkmalen nach dem Oberbegriff des Anspruchs 1.

### Stand der Technik

Flüssigkeitsfilter haben vielfach neben der reinen Filtrierfunktion auch die Aufgabe eines Wasserabscheiders zu erfüllen. Insbesondere bei Kraftstofffiltern von Kraftfahrzeugen ist hierzu das Filtergehäuse mit einer Drainageeinrichtung zur Ableitung von sich ansammelndem Wasser versehen. Dabei wird das höhere spezifische Gewicht des Wasseranteils gegenüber dem Kraftstoff ausgenutzt, in dem sich das mitgeführte Wasser in Schwerkraftrichtung unten im Filtergehäuse ansammelt und über die Drainageeinrichtung einem Sammelbecher zugeführt wird.

Dokument EP 0529 286 offenbart einen Treibstofffilteraufbau mit einem modularen Gehäuse, das in einem ersten Teil einen Sumpf definiert mit einer Öffnung zu Drainage von Wasser. Im Bereich der Öffnung ist ein Verankerungsmittel zur Aufnahme eines Befestigungselementes gehalten, das drei winkelmäßig beabstandete Öffnungen begrenzt. Die Öffnungen werden durch das Verankerungsmittels selber begrenzt, liegen auf der Innenseite des Verankerungsmittels.

Aus der WO 2005/079949A1 ist ein derartiger Filter bekannt, bei dem an der Unterseite des Filtergehäuses ein Sammelbecher mittels einer zentralen Befestigungsschraube angeschraubt ist. Das Filtergehäuse weist an seinem in Schwerkraftrichtung unteren Ende ein Gewindeteil mit einem Innengewinde zur Aufnahme der Befestigungsschraube auf. Das Gewindeteil ist als Block mit quadratischem Grundriss ausgebildet und liegt auf radial nach innen hervorstehenden Nasen eines im Querschnitt runden Halteelementes auf. Das Halteelement ist mit Laschen versehen, die um das quaderförmige Gewindeteil herumgebogen werden und damit das Gewindeteil fixieren. Die Baueinheit aus dem runden Halteelement und dem quaderförmigen Gewindeteil wird in das untere Ende des Filtergehäuses eingesetzt und ist im eingesetzten Zustand zur Aufnahme der Befestigungsschraube des Sammelbechers bereit. Zwischen den quadratisch angeordneten Umfangsflächen des Gewindeteils und der im Querschnitt kreisförmigen Aufnahme sind außenseitig des Gewindeteils kreissegmentförmige Drainagekanäle gebildet, die von dem Innenraum des Filtergehäuses in den Sammelbecher verlaufen und die Ableitung von Wasser aus dem Innenraum des Filtergehäuses in den Sammelbecher ermöglichen.

Hierbei ist der hohe Bauaufwand nachteilig, demnach zusätzlich zum Filtergehäuse zwei Bauteile, nämlich das runde Halteelement und das quaderförmige Gewindeteil erforderlich sind, und demnach das Gewindeteil durch Umbiegen der Haltelaschen aufwendig befestigt werden muss. Insbesondere können durch Anzugskräfte der Befestigungsschraube und durch andere äußere Krafteinwirkungen lokale Spannungsspitzen an den Nasen der Aufnahme entstehen, auf denen das Gewindeteil aufliegt. Eine unbeabsichtigte exzentrische Belastung kann außerdem zu Spannungen im Eckbereich des quaderförmigen Gewindeteils führen, der hier keine oder allenfalls eine linienförmige Anlagefläche an der Umfangswand seiner Aufnahme aufweist. Eine dünnwandige Ausbildung des Filtergehäuses insbesondere aus Kunststoff ist nicht oder nur eingeschränkt möglich.

Der vorliegenden Erfindung liegt die Aufgabe zugrunde, einen Filter der eingangs genannten Gattung derart weiterzubilden, dass die Befestigung des Sammelbechers am Filtergehäuse hinsichtlich Tragfähigkeit und Flüssigkeitsdurchsatz verbessert ist.

Diese Aufgabe wird durch einen Filter mit den Merkmalen des Anspruchs 1 gelöst.

### Offenbarung der Erfindung

Es wird ein Filter vorgeschlagen, bei dem das Filtergehäuse eine becherförmige Aufnahme für das Gewindeteil mit einer zumindest teilweise umlaufenden Haltewand aufweist, wobei das Gewindeteil als in die Aufnahme eingepresste Einpressbuche ausgebildet ist, deren Umfangswand mit einer zumindest teilweise umlaufenden, von der Haltewand der becherförmigen Aufnahme gehaltenen Umfangspressfläche versehen ist.

Der Montageaufwand ist gegenüber dem vorbekannten Stand der Technik deutlich vereinfacht: Die Einpressbuchse wird axial in die Aufnahme eingepresst, wobei die Positionierung der Einpressbuchse und deren Befestigung in einem einzigen Arbeitsgang erfolgen. Eine separate Befestigung durch Umbiegen von Haltelaschen oder dergleichen ist nicht erforderlich. Insbesondere ergibt sich durch die flächige pressende Anlage der Umfangspressfläche an der Haltewand der Aufnahme eine gleichmäßige, flächig verteilte Kraftübertragung unter Vermeidung von Spannungsspitzen, die hoch belastbar ist. Dies ermöglicht insbesondere die einteilige Ausbildung der Aufnahme für die Einpressbuchse mit dem Boden des Filtergehäuses ohne ein separates Einlegeteil. Wegen der flächigen Kraftübertragung können das Filtergehäuse und die Aufnahme für die Einpressbuchse dünnwandig und leichtgewichtig ausgestaltet sein.

Es kann zweckmäßig sein, dass die an der Umfangswand der Einpressbuchse ausgebildete Umfangspressfläche vollständig umlaufend ist, wobei der mindestens eine Drainagekanal in der äußeren Haltewand der Aufnahme für die Einpressbuchse eingeformt ist. In bevorzugter Weiterbildung ist der mindestens eine Drainagekanal in die Umfangswand der Einpressbuchse eingearbeitet. Die entsprechende Formgebung lässt sich an der Einpressbuchse einfach realisieren, wobei es bei der Montage auf die relative Drehwinkellage der Einpressbuchse relativ zu ihrer zylindrischen oder leicht konischen Aufnahme nicht ankommt.

Es kann vorteilhaft sein, einen oder mehrere Drainagekanäle vorzusehen. In bevorzugter Weiterbildung sind bezogen auf eine Längsachse der Einpressbuchse zwei Drainagekanäle diametral einander gegenüberliegend angeordnet. Die Umfangswand der Einpressbuchse ist durch die eingearbeiteten Drainagekanäle nur an zwei Stellen unterbrochen, so dass insgesamt zwei großflächige Umfangspressflächen an der Umfangswand verbleiben. Die symmetrische, diametral gegenüberliegende Anordnung bewirkt eine ebensolche symmetrische, verkantungsfreie Krafteinleitung.

In einer vorteilhaften Ausführungsform ist der Drainagekanal durch eine insbesondere ebene Abflachung der Umfangswand gebildet. Die Abflachung ist fertigungstechnisch leicht zu realisieren und erzeugt außerdem einen großen freien Strömungsquerschnitt des Drainagekanals. Alternativ kann es vorteilhaft sein, dass der Drainagekanal durch eine in die Umfangswand eingearbeitete Längsnut gebildet ist. Hierdurch wird von der ursprünglich unbeeinträchtigten, insbesondere zylindrischen oder konischen Umfangsfläche bezogen auf den gewünschten Strömungsquerschnitt des Drainagekanals nur wenig Material entfernt, so dass vergleichsweise große Umfangspressflächen an der Umfangswand mit entsprechend geringer Flächenpressung und Tragfähigkeit verbleiben.

Es kann zweckmäßig sein, für die Einpressbuchse und deren Aufnahme einen unrunden, beispielsweise rechteckigen Querschnitt vorzusehen. Bevorzugt ist die Umfangspressfläche und die zugehörige Haltewand der Aufnahme im Querschnitt kreisabschnittförmig und insbesondere zylinderabschnittförmig ausgebildet. Es entsteht eine beispielsweise konische, insbesondere jedoch zylindrische Umfangskontur, die eine vom Drehwinkel unabhängige Montage ermöglicht. Gleichzeitig entsteht eine hohe Formstabilität im Bereich der Haltewand, die auch bei dünnwandiger Ausgestaltung zu einer hohen Tragfähigkeit führt.

In vorteilhafter Weiterbildung ist ein Boden der becherförmigen Aufnahme des Filtergehäuses zwischen der Einpressbuchse und dem Sammelbecher klemmend gehalten. Zwischen dem Kopf der Befestigungsschraube und der Einpressbuchse ist in gerader, achsparalleler Spannungslinie durchgehend Material angeordnet, welches als stützende Zwischenlage dient. Der Boden der becherförmigen Aufnahme ist hierbei abgestützt und erfährt außer der Flächenpressung keinerlei beispielsweise biegende Beanspruchung. Ein Festziehen der Befestigungsschraube kann nicht zu einer Überbeanspruchung des Filtergehäuses im Bereich der becherförmigen Aufnahme führen.

In einer bevorzugten Ausführungsform ist die umlaufende Haltewand der becherförmigen Aufnahme des Filtergehäuses in einem Stützring des Sammelbechers gehalten. Die radial wirkenden Presskräfte zwischen der Umfangspressfläche der Einpressbuchse und der umlaufenden Haltewand der Aufnahme können nicht oder nur eingeschränkt zu einer Aufweitung der Aufnahme führen, da die Umfangswand in radialer Richtung durch den Stützring abgestützt ist.

Eine weitere Ausgestaltung der Erfindung sieht vor die Umfangswand mit einer Rändelung zu versehen. Dadurch kann einen bessere Verdrehsicherung gewährleistet werden.

### Kurze Beschreibung der Zeichnungen

Ausführungsbeispiele der Erfindung sind nachstehend anhand der Zeichnung näher erläutert. In der Zeichnung zeigt:

Fig. 1 in Längsschnittdarstellung einen erfindungsgemäßen Filter mit einem am Filtergehäuse angeschraubten Sammelbecher und mit einer im Filtergehäuse eingepressten Einpressbuchse,

Fig. 2 in perspektivischer Ansicht die Einpressbuchse nach Figur 1 mit umfangsseitigen Abflachungen zur Bildung von Drainagekanälen,

Fig. 3 in einer Draufsicht eine Variante der Einpressbuchse nach Figur 2 mit umfangsseitig eingearbeiteten Nuten zur Bildung von Drainagekanälen,

Fig. 4 in vergrößerter Darstellung die Einzelheit IV nach Figur 1 mit Details des gegenseitigen Wechselspiels von Filtergehäuse, Sammelbecher und Einpressbuchse,

Fig. 5 den radial äußeren Stirnseitenbereich des Filtergehäuses nach Figur 1 mit einer optionalen Ablasseinrichtung.

### Ausführungsform(en) der Erfindung

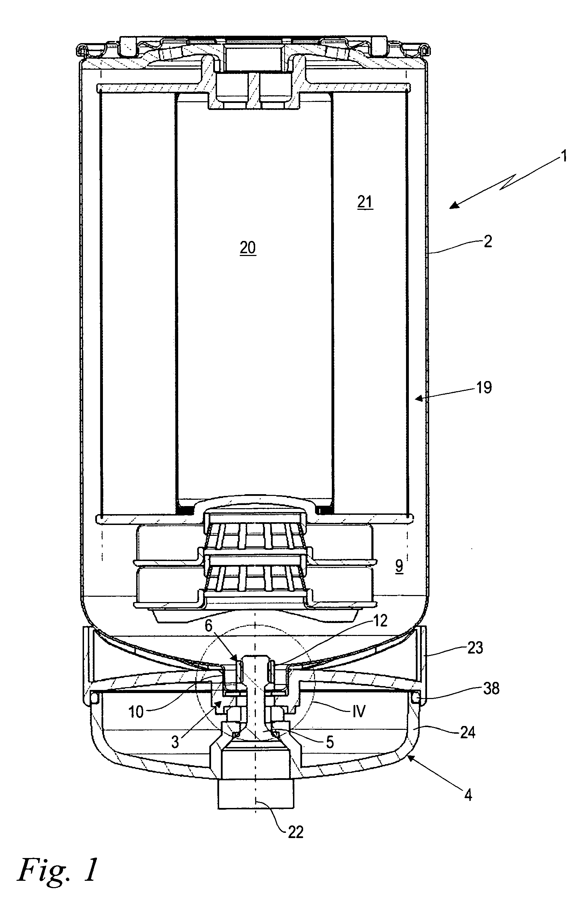

Fig. 1 zeigt in Längsschnittdarstellung einen Flüssigkeitsfilter mit einem Wasserabscheider, wobei im gezeigten Ausführungsbeispiel ein Kraftstofffilter 1 eines Kraftfahrzeuges dargestellt ist. Es können aber auch andere Filter mit einem entsprechenden Abscheider mit den erfindungsgemäßen Merkmalen vorgesehen sein.

Der Kraftstofffilter 1 ist im Wesentlichen rotationssymmetrisch zu einer Längsachse 22 aufgebaut und umfasst ein im Mittenbereich zylindrisches Filtergehäuse 2, welches einen Innenraum 9 umschließt. Im Innenraum 9 ist ein ebenfalls im Wesentlichen zylindrisches Filterelement 21 angeordnet, welches den Innenraum 9 in eine radial äußere Rohseite 19 und eine radial innere Reinseite 20 aufteilt. Im Betrieb wird der in den Innenraum 9 eintretende Kraftstoff von der Rohseite 19 aus radial nach innen durch das Filterelement 21 hindurch zur Reinseite 20 gefördert und von dort abgeleitet. Beim Durchströmen des Filterelementes 21 wird dabei der Kraftstoff gereinigt.

Der hier gezeigte Kraftstofffilter 1 ist als hängender Filter ausgebildet, wobei die Längsachse 22 zumindest näherungsweise parallel zur Gewichtskraftrichtung liegt, und wobei bezogen auf die Gewichtskraftrichtung am unteren Ende des Filtergehäuses 2 ein Abscheider für Wasser oder dergleichen mit einer Drainageeinrichtung 3 und einem Sammelbecher 4 angeordnet ist.

Der Sammelbecher 4 umfasst ein Oberteil 23 und ein koaxial dazu angeordnetes Unterteil 24, wobei das Unterteil 24 mittels einer umlaufenden Dichtung 38 dichtend in das Oberteil 23 eingreift. Mittig koaxial zur Längsachse 22 ist eine Befestigungsschraube 5 durch den Sammelbecher 4 hindurchgesteckt und in den Boden des Filtergehäuses 2 eingeschraubt. Hierdurch ist das Unterteil 24 gegen das Oberteil 23 gedrückt und gleichzeitig der Sammelbecher 4 insgesamt mit dem Filtergehäuse 2 verschraubt.

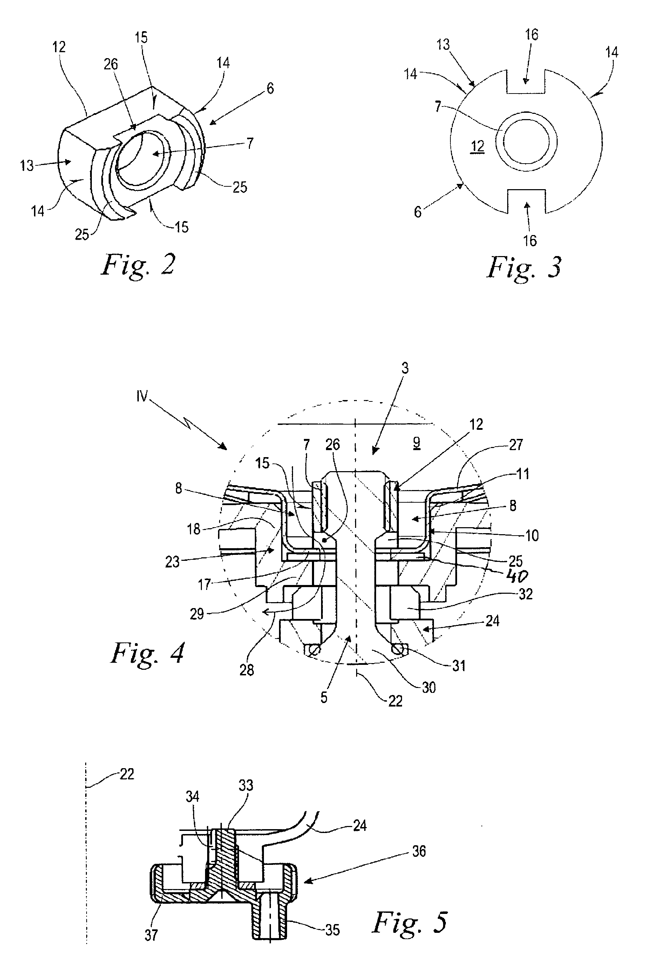

In den Boden des Filtergehäuses 2 ist eine becherförmige Aufnahme 10 eingeformt, in der ein Gewindeteil 6 gehalten ist, wobei die Befestigungsschraube 5 in das Gewindeteil 6 eingedreht ist. Das Gewindeteil 6 ist als im Zusammenhang mit den Fig. 2 bis 3 näher beschriebene Einpressbuchse 12 ausgebildet, die in die becherförmige Aufnahme 10 eingepresst ist. Die Einpressbuchse 12 ist Teil der Drainageeinrichtung 3, die in Fig. 1 als Einzelheit IV gekennzeichnet und im Zusammenhang mit Fig. 4 näher beschrieben ist.

Fig. 2 zeigt in perspektivischer Ansicht ein erstes Ausführungsbeispiel des als Einpressbuchse 12 ausgeführten Gewindeteils 6, wie es in Fig. 1 eingesetzt ist. Die Einpressbuchse 12 ist aus einem zylindrischen Grundkörper gefertigt; es kann aber auch eine konische Ausgestaltung zweckmäßig sein. Mittig und koaxial ist die Einpressbuchse 12 mit einem Innengewinde 7 zur Aufnahme des Gewindeabschnittes der Befestigungsschraube 5 (Fig. 1) versehen. Eine aus der zylindrischen Kontur herausgearbeitete Umfangwand 13 umfasst zwei bezogen auf die Längsachse 22 diametral einander gegenüberliegende, ebene Abflachungen 15, die entlang der Umfangswand 13 durch zwei ebenfalls diametral einander gegenüberliegende Umfangspressflächen 14 miteinander verbunden sind. Die Umfangspressflächen 14 sind im Querschnitt kreisabschnittförmig und infolge der zylindrischen Grundkontur der Einpressbuchse 12 zylinderabschnittförmig ausgebildet, und dienen der klemmenden Befestigung des Gewindeteils 6 in der Aufnahme 10 nach Fig. 1. Ergänzend und zur Unterstützung der Klemmwirkung kann die Umfangspressfläche 14 mit einer Oberflächenstrukturierung beispielweise in Form einer Rändelung versehen sein. Bei der alternativ möglichen Ausgestaltung als Konus sind die Umfangspressflächen 14 im Querschnitt ebenfalls kreisabschnittförmig ausgebildet.

Der Darstellung nach Fig. 2 ist noch zu entnehmen, dass die Einpressbuchse 12 auf einer ihrer Stirnseiten mit zwei axial hervorstehenden Ringabschnitten 25 versehen ist. Die beiden Abflachungen 15 liegen radial so weit innen, dass sich die beiden Ringabschnitte 25 in Umfangsrichtung nicht berühren, sondern dass zwischen ihnen im Bereich der Abflachungen 15 zwei einander gegenüberliegende radiale Durchlässe 26 gebildet sind.

Fig. 3 zeigt in einer schematischen Draufsicht eine alternative Ausführungsform des als Einpressbuchse 12 ausgebildeten Gewindeteils 6. Anstelle der in Fig. 2 dargestellten Abflachungen 15 sind zwei diametral einander gegenüberliegende Längsnuten 16 achsparallel zum Gewindeteil 6 in die zylindrische Umfangskontur der Umfangswand 13 eingearbeitet, so dass auch hier zwei im Querschnitt kreisabschnittförmige Umfangspressflächen 14 gebildet sind. In den übrigen Merkmalen und Bezugszeichen stimmt das Ausführungsbeispiel nach Fig. 3 mit demjenigen nach Fig. 2 überein. Für beide Fälle gilt, dass mindestens eine Abflachung 15 oder Längsnut 16 vorzusehen ist. Es kann aber auch eine höhere Anzahl zweckmäßig sein.

Fig. 4 zeigt in vergrößerter Darstellung die Einzelheit IV nach Fig. 1 mit Details der Drainageeinrichtung 3. Die becherförmige Aufnahme 10 ist einteilig mit einem Boden 27 des Filtergehäuses 2 (Fig. 1) ausgeformt, und umfasst einen bezogen auf die Längsachse 22 bzw. die Schwerkraftrichtung unteren Boden 17, an den sich in Umfangsrichtung und nach oben eine zylindrisch umlaufende Haltewand 11 anschließt. Der Innendurchmesser der Haltewand 11 weist gegenüber dem Außendurchmesser der Umfangspressflächen 14 der Einpressbuchse 12 (Fig. 2, 3) einen derartig geringfügig verkleinerten Durchmesser auf, dass zwischen diesen im montierten Zustand eine Presspassung entsteht. Die becherförmige Aufnahme 10 ist nach oben zum Innenraum 9 des Filtergehäuses 2 (Fig. 1) offen. Die Einpressbuchse 12 ist mit ihren Ringabschnitten voran von oben in die becherförmige Aufnahme 10 eingeführt und dabei eingepresst. Die Umfangspressflächen 14 (Fig. 2) liegen dabei radial pressend an der Innenseite der umlaufenden Haltewand 11 an, so dass die Einpressbuchse 12 klemmend in der becherförmigen Aufnahme 10 gehalten ist. In das Oberteil 23 des Sammelbechers 4 (Fig. 1) ist ein umlaufender Stützring 18 eingeformt, der die Haltewand 11 der Aufnahme 10 radial außenseitig spielfrei umschließt und diese gegen die Presskräfte an den Umfangspressflächen 14 (Fig. 2) abstützt. Zwischen dem Boden 17 und dem Stützflansch 29 ist wie in der Figur dargestellt eine Flachdichtung 40 vorgesehen.

In Richtung der Längsachse 22 liegt die Einpressbuchse 12 mit ihren axial hervorstehenden Ringabschnitten 25 auf dem Boden 17 der Aufnahme 10 auf und erfährt so eine axiale Abstützung. Auf der gegenüberliegenden axialen Seite des Bodens 17 erstreckt sich ausgehend vom Stützring 18 des Oberteils 23 radial nach innen ein Stützflansch 29, der vollflächig am gesamten Umfang des Bodens 17 der Aufnahme 10 anliegt. Das Unterteil 24 des Sammelbechers 4 (Fig.1) ist im Bereich seiner Aufnahme für einen Schraubkopf 30 der Befestigungsschraube 5 mit axial hervorstehenden Stütznasen 32 versehen, die gegen den Stützflansch 29 abgestützt sind. Die Befestigungsschraube 5 liegt mit ihrem Schraubkopf 30 unter Zwischenlage eines umlaufenden Dichtrings 31 in Axialrichtung an der Aufnahme des Unterteils 24 für den Schraubkopf 30 an und ist mit ihrem gegenüberliegenden Gewindeabschnitt in das Innengewinde 7 der Einpressbuchse 12 eingedreht. Im festgezogenen Zustand der Befestigungsschraube 5 entsteht parallel zur Längsachse 22 ein durchgehender, geradliniger Kraftpfad vom Schraubkopf 30 durch die Stütznasen 32 des Unterteils 24, den Stützflansch 29 des Oberteils 23 und dem Boden 17 der Aufnahme 10 hindurch zu den Ringabschnitten 25 der Einpressbuchse 12, wobei der Boden 17 der becherförmigen Aufnahme 10 zwischen der Einpressbuchse 12 und dem Sammelbecher 4 (Fig. 1) klemmend gehalten ist, und wodurch ein axiales Auswölben des Bodens 17 unter Last vermieden ist.

Der zeichnerischen Darstellung nach Fig. 4 kann noch entnommen werden, dass durch die Abflachungen 15 oder alternativ durch die Längsnuten 16 nach Fig. 3 außenseitig der Einpressbuchse 12 zwischen dieser und der Haltewand 11 eine entsprechende Anzahl von Drainagekanälen 8 gebildet ist. Die Drainagekanäle 8 liegen, ebenso wie die Abflachungen 15 oder die Längsnuten 16, einander bezogen auf die Längsachse 22 diametral gegenüber. Sie münden nach oben in den Innenraum 9 und setzen sich in Gegenrichtung durch die radialen Durchlässe 26 sowie Öffnungen im Boden 17 und im Stützflansch 29 zwischen den Stütznasen 32 hindurch fort. Demnach kann aus dem Kraftstoff abgeschiedenes Wasser entlang einem Pfeil 28 vom Innenraum 9 in den Sammelbecher 4 (Fig. 1) unter Ausnutzung des im Vergleich zum Kraftstoff erhöhten spezifischen Gewichts abgeleitet und dort gesammelt werden. Alternativ kann es auch zweckmäßig sein, die Umfangspressfläche 14 (Fig. 2, 3) in Umfangsrichtung ohne Unterbrechung durch Abflachungen 15, Längsnuten 16 oder dergleichen auszugestalten, wobei dann die Drainagekanäle 8 in die Haltewand 11 der Aufnahme 10 radial außenseitig der Einpressbuchse 12 einzuformen sind.

Unter erneutem Bezug auf Fig. 1 erfolgt die Entleerung des Sammelbechers 4 nach Lösen der Befestigungsschraube 5. Der Sammelbecher 4 kann dann vom Filtergehäuse 2 abgenommen werden, wobei das im Sammelbehälter 4 gesammelte Gemisch aus Kraftstoff und Wasser zunächst im Sammelbehälter 4 verbleibt. Anschließend kann das Unterteil 24 vom Oberteil 23 abgezogen und der gesammelte Inhalt entsorgt werden. Alternativ oder zusätzlich kann auch eine in Fig. 5 dargestellte Ablasseinrichtung 36 vorgesehen werden, die radial außenseitig der Längsachse 22 im Boden des Unterteils 24 angeordnet ist. Hierzu weist die Ablasseinrichtung 36 ein manuell betätigbares Handrad 37 auf, an dem eine Schraube 33 mit einer Längsnut 34 angeformt ist. Die Schraube 33 ist in eine entsprechende Gewindeaufnahme des Unterteils 24 eingeschraubt. Durch Drehung des Handrades 37 kann mittels der Längsnut 34 eine strömungsleitende Verbindung zwischen der Innenseite des Sammelbechers 4 (Fig. 1) und der Umgebung hergestellt werden, wobei das gesammelte Flüssigkeitsgemisch durch die Längsnut 34 und einen angeformten Ablassnippel 35 in einen Auffangbehälter oder dergleichen abgeleitet werden kann.

## Patentansprüche

1. Filter, insbesondere ein Kraftstofffilter (1) für ein Kraftfahrzeug, mit einem Filtergehäuse (2) und mit einer Drainageeinrichtung (3), wobei die Drainageeinrichtung (3) einen Sammelbecher (4), eine Befestigungsschraube (5) für den Sammelbecher (4) sowie ein im Filtergehäuse (2) gehaltenes Gewindeteil (6) mit einem Innengewinde (7) zur Aufnahme der Befestigungsschraube (5) umfasst, und wobei außenseitig des Gewindeteils (6) mindestens ein Drainagekanal (8) von einem Innenraum (9) des Filtergehäuses (2) in den Sammelbecher (4) verläuft, **dadurch gekennzeichnet, dass** das Filtergehäuse (2) eine becherförmige Aufnahme (10) für das Gewindeteil (6) mit einer zumindest teilweise umlaufenden Haltewand (11) aufweist, und dass das Gewindeteil (6) als in die Aufnahme (10) eingepresste Einpressbuchse (12) ausgebildet ist, deren Umfangswand (13) mit einer zumindest teilweise umlaufenden, von der Haltewand (11) gehaltenen Umfangspressfläche (14) versehen ist.

2. Filter nach Anspruch 1, **dadurch gekennzeichnet, dass** der mindestens eine Drainagekanal (8) in die Umfangswand (13) der Einpressbuchse (12) eingearbeitet ist.

3. Filter nach Anspruch 2, **dadurch gekennzeichnet, dass** bezogen auf eine Längsachse der Einpressbuchse (12) zwei Drainagekanäle (8) diametral einander gegenüberliegend angeordnet sind.

4. Filter nach Anspruch 2 oder 3, **dadurch gekennzeichnet, dass** der Drainagekanal (8) durch eine insbesondere ebene Abflachung (15) der Umfangswand (13) gebildet ist.

5. Filter nach Anspruch 2 oder 3, **dadurch gekennzeichnet, dass** der Drainagekanal (8) durch eine in die Umfangswand (13) eingearbeitete Längsnut (16) gebildet ist.

6. Filter nach einem der Ansprüche 1 bis 5, **dadurch gekennzeichnet, dass** die Umfangspressfläche (14) im Querschnitt kreisabschnittförmig und insbesondere zylinderabschnittförmig ausgebildet ist.

7. Filter nach einem der Ansprüche 1 bis 6, **dadurch gekennzeichnet, dass** der Sammelbecher (4) zwischen dem Boden (17) und der Befestigungsschraube (5) klemmend gehalten ist.

8. Filter nach einem der Ansprüche 1 bis 7, **dadurch gekennzeichnet, dass** die umlaufende Haltewand (11) der becherförmigen Aufnahme (10) des Filtergehäuses (2) in einem Stützring (18) des Sammelbechers (4) gehalten ist.

9. Filter nach einem der Ansprüche 1 bis 8, **dadurch gekennzeichnet, dass** die Umfangswand (13) eine umlaufende Rändelung aufweist.

## Claims

1. Filter, in particular a fuel filter (1) for a motor vehicle, with a filter housing (2) and a drainage device (3), the drainage device (3) comprising a collecting beaker (4), a fastening bolt (5) for the collecting beaker (4) as well as a threaded portion (6) supported in the filter housing (2) and provided with an internal thread (7) for receiving the fastening bolt (5), and outside of the threaded portion (6) at least one drainage duct (8) extending from an interior area (9) of the filter housing (2) into the collecting beaker (4), **characterized in that** the filter housing (2) features a cup-shaped support (10) for the threaded portion (6) with an at least partially circumferential supporting wall (11), and that the threaded portion (6) is designed as press-in bush (12) pressed into the support (10) the peripheral wall (12) of which has an at least partially circumferential peripheral press surface (14) supported by the supporting wall (11).

2. Filter according to claim 1, **characterized in that** the at least one drainage duct (8) is incorporated into the peripheral wall (13) of the press-in bush (12).

3. Filter according to claim 2, **characterized in that**, relative to a longitudinal axis of the press-in bush (12), two drainage ducts (8) are arranged diametrically opposed.

4. Filter according to claim 2 or 3, **characterized in that** the drainage duct (8) is formed by an in particular even flattening (15) of the peripheral wall (13).

5. Filter according to claim 2 or 3, **characterized in that** the drainage duct (8) is formed by a longitudinal groove (16) incorporated into the peripheral wall (16).

6. Filter according to one of the claims 1 to 5, **characterized in that** the cross-section of the peripheral press surface (14) has a circular-shaped design and in particular a cylindrical-shaped design.

7. Filter according to one of the claims 1 to 6, **characterized in that** the collecting beaker (4) is clamped between the bottom (17) and the fastening bolt (5).

8. Filter according to one of the claims 1 to 7, **characterized in that** the circumferential supporting wall (11) of the cup-shaped support (10) of the filter housing (2) is held in a supporting ring (18) of the collecting beaker (4).

9. Filter according to one of the claims 1 to 8, **characterized in that** the peripheral wall (13) features a circumferential knurling.

## Revendications

1. Filtre, notamment un filtre à carburant (1) pour un véhicule automobile, avec un boîtier de filtre (2) et avec un dispositif de drainage (3), le dispositif de drainage (3) comprenant un godet collecteur (4), une vis de fixation (5) pour le godet collecteur (4) et une pièce filetée (6) maintenue dans le boîtier de filtre (2) et pourvue d'un filet intérieur (7) pour le logement de la vis de fixation (5), et au moins un canal de drainage (8) évoluant, sur la face extérieure de la pièce filetée (6), d'une partie intérieure (9) du boîtier de filtre (2) vers le godet collecteur (4), **caractérisé en ce que** le boîtier de filtre (2) présente un logement en forme de godet (10) pour la pièce filetée (6) avec une paroi de retenue (11) au moins partiellement circulaire et **en ce que** la pièce filetée (6) est réalisée en tant que bague intérieure (12) pressée dans le logement (10) et dont la paroi circonférentielle (13) est pourvue d'une surface de pressage circonférentielle (14) au moins partiellement circulaire et maintenue par la paroi de retenue (11).

2. Filtre selon la revendication 1, **caractérisé en ce que** le canal de drainage (8), au moins au nombre de un, est incorporé dans la paroi circonférentielle (13) de la bague intérieure (12).

3. Filtre selon la revendication 2, **caractérisé en ce que** deux canaux de drainage (8) sont disposés l'un en face de l'autre en sens diamétral, considéré sur un axe longitudinal de la bague intérieure (12).

4. Filtre selon la revendication 2 ou 3, **caractérisé en ce que** le canal de drainage (8) est formé par un méplat (15) notamment plan de la paroi circonférentielle (13).

5. Filtre selon la revendication 2 ou 3, **caractérisé en ce que** le canal de drainage (8) est formé par une rainure longitudinale (16) incorporée dans la paroi circonférentielle (13).

6. Filtre selon l'une des revendications 1 à 5, **caractérisé en ce que** la surface de pressage circonférentielle (14) présente une section en forme de segment de cercle, notamment en forme de segment de cylindre.

7. Filtre selon l'une des revendications 1 à 6, **caractérisé en ce que** le godet collecteur (4) est serré entre le fond (17) et la vis de fixation (5).

8. Filtre selon l'une des revendications 1 à 7, **caractérisé en ce que** la paroi de retenue (11) circulaire du logement (10) en forme de godet du boîtier de filtre (2) est maintenue dans une bague d'appui (18) du godet collecteur (4).

9. Filtre selon l'une des revendications 1 à 8, **caractérisé en ce que** la paroi circonférentielle (13) présente un moletage circulaire.
